(19) **Europäisches Patentamt European Patent Office Office européen des brevets**

(11) **EP 3 787 330 B1**

(12) **EUROPEAN PATENT SPECIFICATION**

(45) Date of publication and mention
of the grant of the patent:
**14.06.2023 Bulletin 2023/24**

(21) Application number: **19194647.4**

(22) Date of filing: **30.08.2019**

(51) International Patent Classification (IPC):
***H04W 24/02*** (2009.01)   ***H04L 41/04*** (2022.01)

(52) Cooperative Patent Classification (CPC):
**H04W 24/02; H04L 41/04; H04L 41/147;
H04L 41/5009; H04L 41/5067;** H04L 41/342;
H04W 24/08

(54) **NETWORK ARCHITECTURE TO IMPROVE SERVICE QUALITY MANAGEMENT**

NETZWERKARCHITEKTUR ZUR VERBESSERUNG DER DIENSTQUALITÄTSVERWALTUNG

ARCHITECTURE DE RÉSEAU POUR AMÉLIORER LA GESTION DE LA QUALITÉ DE SERVICE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.03.2021 Bulletin 2021/09**

(73) Proprietor: **Deutsche Telekom AG
53113 Bonn (DE)**

(72) Inventors:
• **YOUSSEF, Ziad
  50999 Köln (DE)**
• **SCHMITZ, Gerald
  53757 Sankt Augustin (DE)**

• **MA, Jun
  53757 Sankt Augustin (DE)**
• **YILMAZ, Celal
  53175 Bonn (DE)**

(74) Representative: **Vossius & Partner
Patentanwälte Rechtsanwälte mbB
Siebertstrasse 3
81675 München (DE)**

(56) References cited:
**EP-A1- 3 058 772      EP-B1- 3 058 772
WO-A1-2017/176248      US-A1- 2016 352 924
US-A1- 2019 222 491**

**Description**

FIELD OF THE INVENTION

The invention relates to a network architecture capable of monitoring changes in a network and improving a service quality management of the network and related method and network node.

BACKGROUND OF THE INVENTION

With regard to the large number of network options and configurations of the fifth generation (5G) of mobile communications network management functions, network automation as well as data analytics and machine learning reflect a paradigm shift in terms of self-organizing-networks (SON), dynamic policy-management and smart network monitoring from a nice-to-have feature to a mandatory feature. The technical solution for network management functions and network automation using the SON has been introduced by 3rd generation partner project (3GPP) Rel. 16 and European Telecommunications Standards Institute (ETSI) as 5G enabler. Under such a condition, new architecture approaches based on network data analytics functions (NWDAF) and the network functions virtualization (NFV) and management and orchestration (MANO) are introduced. Furthermore, legacy mobile communications generations (e.g. long-term evolution (LTE)) supports the SON capability from 3GPP Rel. TS32.500 and Rel. TS36.902 to promote the network automation. Moreover, it can be noted that the most known SON approaches consider on optimizing low-level radio parameters such as backhaul, caching, coverage, capacity, mobility management, handover parameters optimization, load balancing, fault detection and classification, resource optimization and cell outage management. In addition, regarding the spectrum access system (SAS) based frequency assignment introduced by the US Federal Communications Commission (FCC), dynamic policy-management and SON assistance becomes an important part, especially due to the slicing concepts in 5G (deploying Wi-Fi functionalities as small cell).

Furthermore, due to the intended use of small cells, the complexity of the network increases dramatically. Thus, appropriate management and monitoring solutions are needed.

Document EP 3 058 772 A1 relates to optimizing frequency and power resource allocation to a plurality of subscribers in a SON.

Document WO 2017/176248 A1 relates to quality-of-experience/quality-of-service (QoE/QoS) management.

Document US 2019/222491 A1 relates to systems and methods for adaptive Over-the-Top (OTT) content QoE optimization.

Document US 2016/352924 A1 relates to a method and apparatus for customer service management for a wireless communication network.

DESCRIPTION OF THE INVENTION

To solve the abovementioned issue, the present disclosure provides a network architecture capable of monitoring changes in a network and improving a service quality management of the network and related method and network node.

These and other objectives are achieved by a network architecture, a method and a network node according to the independent claims. Preferred embodiments are evident from the dependent patent claims.

In an embodiment, the present disclosure relates to a network architecture. The network architecture comprises:

a planning/policies (PLPO) unit, configured to determine at least one target parameter of a network and to provide quality of experience (QoE);
a management automation unit (MAU), including a self-organizing-network, SON, configured to optimize the at least one target parameter of the network;
a physical parameter and measurement layer (PML), configured to acquire a plurality of network parameters of the network and a plurality of measurement results of the network from the management automation unit;
a parameter abstraction and performance metric (PAPM) layer, configured to subsume the plurality of network parameters into a plurality of resources based on correlations among the plurality of network parameters and to determine a performance metric corresponding to each of at least one network parameter in each of the plurality of resources based on the acquired plurality of measurement results; and
a smart virtual monitoring layer (SVML), configured to determine behaviors of the network, which are affected by the optimized at least one target parameter, based on the determined performance metric and the plurality of resources, to validate the behaviors of the network based on the QoE as references of determining the behaviors of the network, and to transmit the behaviors of the network to the planning/policies unit for enabling the planning/policies unit to determine the at least one target parameter based on the behaviors of the network.

Various embodiments may preferably implement the following features:
Preferably, the PAPM layer comprises:

an acquiring component, configured to acquire the plurality of network parameters and the plurality of measurement results from the MAU via the physical PML;
a mapping component, configured to subsume the plurality of network parameters to the plurality of resources based on the correlations among the plurality of network parameters; and
a performance metric component, configured to determine the performance metric corresponding to each of at least one network parameter in each of the plurality of resources by determining a real number for each of at least one network parameter in each of the plurality of resources based on the plurality of measurement results.

In this embodiment, a suitable structure for implementing the PAPM layer is disclosed.
Preferably, the mapping component comprises:

a parameter priority sub-component, configured to determine each the plurality of network parameters is a primary relevant parameter or a secondary relevant parameter,
an abstraction sub-component, configured to subsume the plurality of network parameters to the plurality of resources based on the determined results of the parameter priority sub-component, and
a clustering sub-component, configured to cluster the plurality of resources based on a distribution of the plurality of resources for enabling the abstraction sub-component to subsume the plurality of network parameters to the plurality of resource further based on the plurality of clustered resources.

In this embodiment, the plurality of resources is provided based on the relevant type of each of the plurality of network parameters and the distribution of the plurality of resources.
Preferably, the PAPM layer further comprises a remapping component, configured to re-subsume the plurality of resources to the plurality of network parameters which is provided to the SVML. The remapping component is able to provide the plurality of network parameters to the SVML without additionally requesting the network or MAU.
Preferably, the SVML comprises:

a learning component, configured to apply learning algorithms on each of at least one network parameter of each of the plurality of resources by using the performance metric, to determine the behaviors of the network,

a predicting component, configured to predict future behaviors of the network based on the determined behaviors of the network, and

a validation component, configured to validate the behaviors and the future behaviors of the network, which are affected by the optimized at least one target parameter, based on QoE for enabling the learning component and the predicting component determine the behaviors and the future behaviors of the network based on the validated results.

In this embodiment, an appropriate structure for realizing the SVML is proposed.
Preferably, the SVML further comprises a SON assistance component, configured to transmit the determined behaviors of the network to the SON of the MAU for enabling the SON to optimize the at least one target parameter based on the behaviors and the future behaviors of the network. The SON assistance component is able to provide more information for assisting the SON to optimize the network in a more accurate way.
Preferably, the SVML is further configured to analyze the plurality of network parameters and the plurality measurement results, and the network architecture further comprises a business intelligence, BI, layer, configured to generate analytic results based on the performance metric and the analyzed results of the SVML for enabling the PLPO unit to determine the at least one target parameter based on the analytic results of the BI layer. That is the BI layer is able to provide action recommendations and reports service to the PLPO unit, so as to allow the PLPO unit to determine new (business) strategy.
In an embodiment, the present disclosure relates to a method for use in a network node. The method comprises:

determining at least one target parameter and quality of experience, QoE, of a network,

optimizing the at least one target parameter of the network,

acquiring a plurality of network parameters of the network and a plurality of measurement results of the network,

subsuming the plurality of network parameters into a plurality of resources based on correlations among the plurality of network parameters,

determining a performance metric corresponding to each of at least one network parameter in each of the plurality of resources based on the acquired plurality of measurement results,

determining behaviors of the network based on the determined performance metric and the plurality of resources, as a reference of determining the at least one target parameter, and

validating the behaviors of the network, which are affected by the optimized at least one target parameter, based on the QoE as references of determining the behaviors of the network.

Various embodiments may preferably implement the following features:
Preferably, the step of determining the performance metric corresponding to each of at least one network parameter in each of the plurality of resources based on the acquired plurality of measurement results comprises determining the performance metric corresponding to each of at least one network parameter in each of the plurality of resources by determining a real number for each of at least one network parameter in each of the plurality of resources based on the plurality of measurement results. The plurality of resources and the performance metric is appropriately prepared for determining the behaviors of the network.

Preferably, the step of subsuming the plurality of network parameters into the plurality of resources based on correlations among the plurality of network parameters comprises subsuming the plurality of network parameters to the plurality of resources based on determining each the plurality of network parameters is a primary relevant parameter or a secondary relevant parameter and clustering the plurality of resources based on a distribution of the plurality of resources. In this embodiment, the plurality of resources is provided based on the relevant type of each of the plurality of network parameters and the distribution of the plurality of resources.

Preferably, the method further comprises re-subsuming the plurality of resources to the plurality of network parameters. In this embodiment, the plurality of network parameters is acquired without additionally requesting the network or MAU.

Preferably, the step of determining the behaviors of the network, which are affected by the optimized at least one target parameter, based on the determined performance metric and the plurality of resources and validating the behaviors of the network based on the QoE as references of determining the behaviors of the network comprises:

applying learning algorithms on each of at least one network parameter of each of the plurality of resources by using the performance metric, to determine the behaviors of the network, and
predicting future behaviors of the network based on the determined behaviors of the network, and
validating the behaviors and the future behaviors of the network, which are affected by the optimized at least one target parameter, based on QoE as references of determining the behaviors and the future behaviors of the network.

In this embodiment, the behaviors and the future behaviors of the network can be appropriately acquired.

Preferably, the method further comprises optimizing the at least one target parameter based on the behaviors and the future behaviors of the network. The network would be optimized in a more accurate way.

Preferably, the method further comprises:

analyzing the plurality of network parameters and the plurality measurement results, and
generating analytic results based on the performance metric and the analyzed results of the plurality of network parameters and the plurality of measurement results, and
determining the at least one target parameter based on the analytic results.

In this embodiment, the plurality of network parameters and the plurality measurement results are further analyzed for providing action recommendations and reports service to determine new (business) strategy.

In an embodiment, the present disclosure relates to network node comprising a processor and a storage unit, wherein the processor is configured to read a program code from the storage unit and implement any step in the aforementioned method.

BRIEF DESCRIPTION OF THE DRAWINGS

The subject matter of the invention will be explained in more detail in the following text with reference to preferred exemplary embodiments which are illustrated in the attached drawings, in which:

FIG. 1 shows a network architecture according to an embodiment of the present disclosure.
FIG. 2 shows a network architecture according to an embodiment of the present disclosure.
FIG. 3 shows a reference model according to an example of the present disclosure.
FIG. 4 shows a protocol layer model according to an example of the present disclosure.
FIG. 5 shows a protocol layer model according to an embodiment of the present disclosure.
FIG. 6 shows a flowchart of a method according to an embodiment of the present disclosure.
FIG. 7 shows a network node according to an embodiment of the present disclosure.

The reference symbols used in the drawings, and their primary meanings, are listed in summary form in the list of designations. In principle, identical parts are provided with the same reference symbols in the figures.

DETAILED DESCRIPTION OF PREFERRED EMBODIMENTS

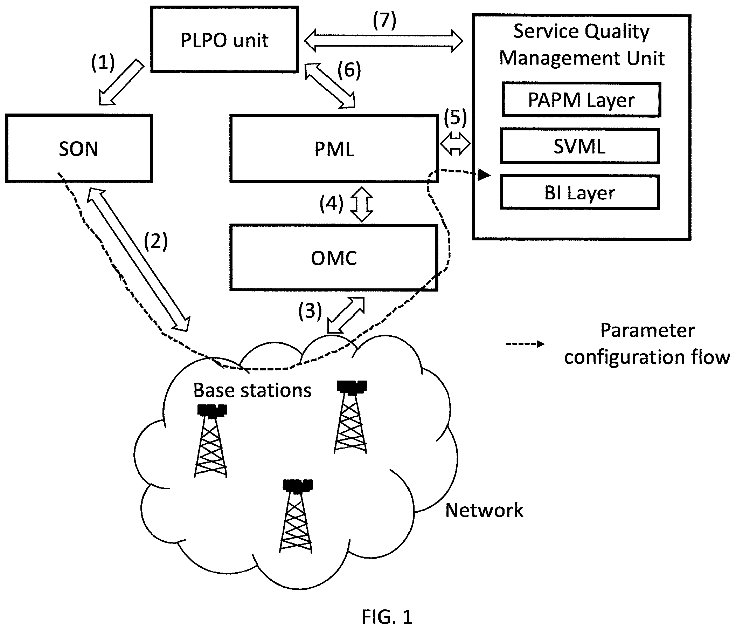

FIG. 1 shows a network architecture according to an embodiment of the present disclosure. In FIG. 1, the network architecture comprises a planning/policies (PLPO) unit, self-organizing network (SON) services, a network consisting of a plurality of base stations (e.g. eNBs), an operating and maintenance center (OMC), a parameters and measurement layer (PML) and a service quality management unit. In addition, FIG. 1 shows processing flows (1) to (7) of interactions between the components in the network architecture.

In the process flow (1), the PLPO unit determines requirements of optimizing network parameters of the network. More specifically, the PLPO unit is responsible for planning tasks and defining policies of optimizing network parameters. Usually, the policies are built in a static manner considering incumbents requirements. Next, the SON services optimize the network parameters of the network based on the requirements from the PLPO unit (process flow (2)). After the network is optimized by the SON, the OMC reads the network parameters from the network and the PML reads the network parameters from the OMC in the process flows (3) and (4). Similarly, the service quality management unit reads the network parameters through the OMC and the PML in the process flow (5). In the process flow (6), the PML sends the actual network parameters read through the OMC to the PLPO unit and the PLPO unit may determine subsequent requirements of optimizing the network parameters. In this embodiment, the service quality management unit is responsible for coordination, smart dynamic network parameter, network behavior monitoring and validation of the functionality of the SON services. Moreover, the service quality management unit may provide relevant information for assisting the PLPO unit to determine the requirements of optimizing the network parameters.

More specifically, the SON services are highly automated such that an operator of the network may not be able to validate and follow the internal parameter configuration decisions and actions performed on its own network. In the embodiment shown in FIG. 1, the missed information about the way how the SON services decided to perform optimizations on the network is reproducible via a parameter configuration flow (i.e. the process flows (2) to (5)) shown in FIG. 1 and by utilizing the service quality management unit. In other words, the missed information about the way how the SON services decided to perform optimizations on the network is identifiable, so as to indirectly monitor the actual network parameters.

The detailed operations of the service quality management unit based on the parameter configuration flow will be described in the followings. In the embodiment shown in FIG. 1, the service quality management unit comprises a parameter abstraction and performance metric (PAPM) layer and a smart virtual monitoring layer (SVML). In general, the data (e.g. the network parameters) from the parameter configuration flow will at first be reduced by the PAPM layer to make real-time data processing feasible. In addition, the PAPM layer also determines a performance metric for evaluating data and network performance. Next, the reduced data and the performance metric from the PAPM layer are provided to the SVML, to allow the SVML to perform the smart virtual monitoring via learning algorithms. That is, the SVML tracks (clones) and predicts the network parameters and network behaviors of the network, which are influenced (e.g. affected) by the SON services' decisions, indirectly through the parameter configuration flow. The results of the SVML (e.g. the inferred and predicted network parameters and the network behaviors) are forward to the PLPO unit as action recommendations.

In FIG. 1, the service quality management unit further comprises a business intelligence (BI) layer which is configured to infer service drawbacks and actions recommendations based on the results of the SVML. In an embodiment, the BI layer may be omitted.

In an embodiment, the PAPM layer reduces the data by transforming the network parameters into a plurality of resources, to reduce the amount of learning operations and to make real-time data processing become feasible. In this embodiment, each of the plurality of resources comprises several network parameters which are physically or management relevantly correlated. Therefore, the variety of network parameters is reduced, making the real-time processing of the network parameters become feasible. The plurality of resources is used as objectives in network behavior learning performed by the SVML. In an example, the plurality of resources could be created by using a dimensional reduction method.

In an embodiment, the SVML applies the learning algorithms on the plurality of resources provided by the PAPM layer, to infer the network behavior of the network which are influenced by the optimized results of the SON services. The inferred network behavior enables different beneficial applications such as the smart virtual monitoring and action recommendations due to the possibility of predicting network behavior of the network. The network parameter and behavior monitoring is tracked by an iterative function approximation (i.e. learned network behaviors). The learned network behaviors are used to predict the future network behavior. Due to the difficulty to request all network parameters and their performances on demand, the SVML of the present disclosure makes the smart virtual monitoring feasible. That is, based on the learning results, an outlook of the network behavior for a certain period of times could be obtained. In other words, the SVML reduces data requirements of showing the real-time behavior of the real network. In this embodiment, the data requirements are reduced as minimum as those required by the learning algorithms. Furthermore, the SVML may perform a validation on the learned network behavior, to ensure the correct learning and action execution performed by the SVML as well as the SON services. The validation could be carried out through an apprenticeship learning (AL) and an imitation learning (IL)

In an embodiment, the BI layer performs and provides business driven analysis. The BI layer collects information or data from the PAPM layer (e.g. the performance metric) and the SVML (e.g. data analytics/analysis results). According the collected information, the BI layer provides action recommendations and reports services to the PLPO unit for determining new (business) strategies.

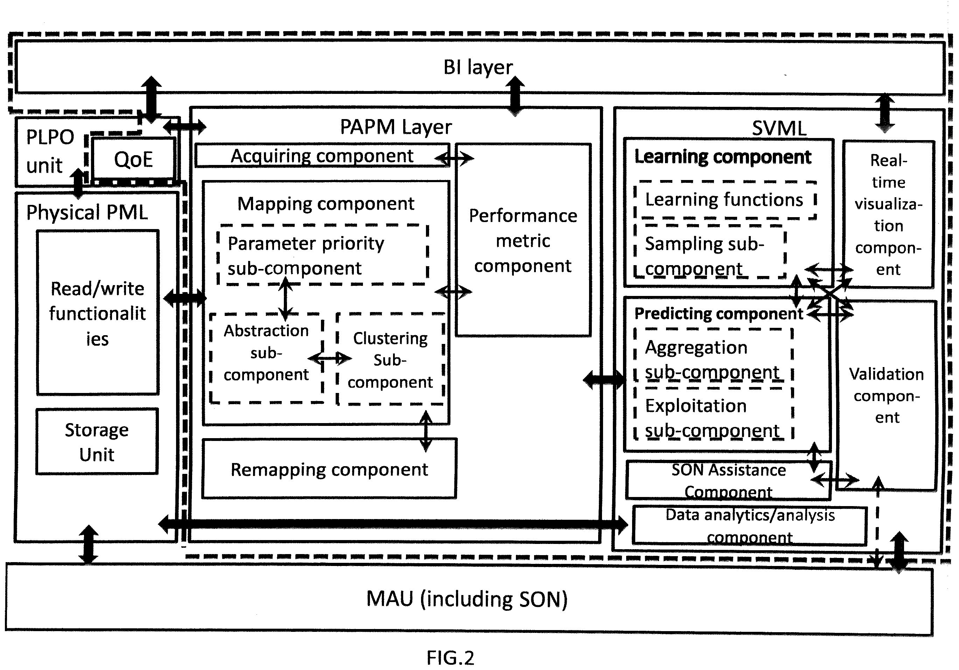

FIG. 2 shows a network architecture according to an embodiment of the present disclosure. As shown in FIG. 2, the network architecture comprises a PLPO unit, a physical PML, a management automation unit (MAU), a PAPM layer, a SVML and a BI layer. In an embodiment, the BI layer may be omitted.

In the embodiment shown in FIG. 2, the PLPO unit is configured to determine at least one target parameter of a network and to determine and provide quality of experience (QoE) of the network. The PLPO unit is responsible for planning tasks and defining policies of optimizing the at least one target parameter of the network. Usually, the policies are built in a static manner considering incumbents requirements. Furthermore, the PLPO unit may have tools for determining and controlling the MAU based on templates requirements.

The MAU includes a SON configured to optimize the at least one target parameter of the network. The MAU may comprise not only the SON but also other network management and automation units such as the OMC shown in FIG. 1, virtualized network functions built by network functions virtualization (NFV), network data analysis functions (NWDAFs), etc.

The physical PML is configured to acquire a plurality of network parameters of the network and a plurality of measurement results of the network from the MAU. The physical PML performs the read/write functionalities to the MAU, e.g., for acquiring the plurality of network parameters of the network and the plurality of measurement results of the network. In addition, the physical PML has storage capabilities (e.g. by using data base techniques).

The PAPM layer is configured to subsume the plurality of network parameters into a plurality of resources based on correlations among the plurality of network parameters and to determine a performance metric corresponding to each of at least one network parameter in each of the plurality of resources based on the acquired plurality of measurement results.

In detail, the PAPM layer may comprise an acquiring component, a mapping component and a performance metric component. The acquiring component is configured to acquire the plurality of network parameters and the plurality of measurement results from the MAU via the physical PML. In addition, the acquiring component performs measurement reporting functionalities regarding the network parameters of interest. In the case of missing a network feedback loop which is able to show changes in the network parameters of interest caused by the requirements from the PLPO unit, the measurement results are derived from the network parameters using correlation or similar techniques. Under such a condition, the acquiring component may comprise sub-components for deriving the measurement results.

The mapping component is configured to subsume the plurality of network parameters to the plurality of resources based on the correlations among the plurality of network parameters. The mapping component aims to abstract the plurality of network parameters acquired from the physical PML into the plurality of resources. From the mathematical view, the parameter mapping function of the mapping component may be expressed as:

$$f_{Mapping} : K_{Par} \rightarrow K_{Resources}$$

where $K_{Par}$ is a parameter set comprising the plurality of network parameters and $K_{Resources}$ is a resource set comprising the plurality of resources. The parameter mapping function $f_{Mapping}$ transforms parameter set $K_{Par}$ into the resource set $K_{Resources}$. Under such a condition, each of the plurality of resources describes several physical or management relevant correlated parameters as a block and thus reduces the variety of parameters (e.g. for realizing the real-time processing).

In an embodiment, the mapping component comprises a parameter priority sub-component, an abstraction sub-component and a clustering sub-component. The parameter priority sub-component considers the relevance among the plurality of network parameters. The parameter priority sub-component may determine each of the plurality of network parameters is a primary relevant parameters and a secondary relevant parameter. In an example, the primary relevant parameters may be the network are critical and essential for the network and are objectives to be monitored or analyzed (are major in the plurality of resources). Under this definition, the primary relevance parameters may comprise bandwidth, power, licenses, etc. In another example, the primary relevant parameters are the parameters with great variations. That is, the primary relevant parameters change their values frequently and therefore are imported to monitor. Note that the primary relevant parameters with the great variations may be determined via statistical methods in the PAPM layer. The secondary relevant parameters are satisfying parameters, which means the secondary relevant parameters must meet a certain threshold to avoid the no-free-lunch-theorem.

The abstraction sub-component is configured to subsume (e.g. abstract) parameter subsets $K_{i,\mathrm{subpar}} \subset K_{Par}$ to resources $i \in K_{Resources}$ based on results of the parameter priority sub-component and the distribution-driven clustering sub-component. That is, the abstraction sub-component builds the core abstraction and performs the mapping function $f_{\mathrm{Mapping}}$.

The clustering sub-component is configured to cluster the plurality of resources based on, e.g., a spatial distribution of the suggested resources outcome. The clustering sub-component performs the clustering iteratively with the abstraction sub-component. That is, the abstraction sub-component may subsume the plurality of network parameters to the plurality of resource further based on the plurality of clustered resources (i.e. the results of the clustering sub-component). Under such a condition, the mapping function could be enhanced by taking the spatial distribution clustering into account, so as to infer better mapping function. Note that, the clustering sub-component may use any distribution in addition to the spatial distribution or adopt several distributions related to different aspects.

The performance metric component of the PAPM layer is configured to determine a qualitative/ quantitative (or quality of serve) value (i.e. a real number) to describe the impact of each of network parameters involved in each of the plurality of resources. The performance metric component reflects the objective achievement of the whole network. Moreover, the performance metric component combines the objective within a resource and the satisfying parameters from the secondary relevant parameter component in a real value. From mathematical view, the function of the performance metric component may be expressed as $f_{\mathrm{Metric}}: K_{i,\mathrm{subpar}} \rightarrow \mathbb{R}$.

In an embodiment, the PAPM layer may further comprise a remapping component. As its name suggests, the remapping component performs the assignment from the plurality of resources to the plurality of network parameters (e.g. the results produced by the mapping component). From the mathematical view, the remapping component is an inverse function: $f_{\mathrm{Mapping}}^{-1}: K_{\mathrm{Resource}} \rightarrow K_{\mathrm{Par}}$. In an example, the remapping component performs the remapping function without loss of information. Furthermore, the remapping function may be executable in real-time. The results of remapping component are provided to the SVML, because the SVML requires an access to the MAU via the PML.

In FIG. 2, the SVML is configured to determine behaviors of the network based on the determined performance metric and the plurality of resources, to validate the behaviors of the network based on the QoE as references of determining the behaviors of the network, and to transmit the behaviors of the network to the PLPO unit for helping the PLPO unit to determine the at least one target parameter based on the behaviors of the network.

In an embodiment, the SVML comprises a learning component, a predicting component and a validation component. The learning component is configured to apply the learning algorithms on each of at least one network parameter of each of the plurality of resources by using the performance metric, to determine the behaviors of the network. The predicting component is configured to predict future behaviors of the network based on the determined behaviors of the network. The validation component is configured to validate the behaviors and the future behaviors of the network based on QoE for enabling the learning component and the predicting component determine the behaviors and the future behaviors of the network based on the validated results.

In an embodiment of the network architecture having a network feedback loop which provides a network action-reaction chain, the learning component provides the network optimization monitoring process. Note that, having the network feedback loop providing the network action-reaction chain allows the network reaction resulting from an adjusted network parameter value to be obtained. The network reaction is measured based on key performance indicators of the network. That is, the network feedback loop allows an automation approach leading in an optimization process.

In an embodiment of the network architecture not having the network action-reaction chain, the learning component provides the parameter monitoring process based on a regression process. Under such a condition, the parameter monitoring process could be performed without the resource abstraction (e.g. incumbents/primary relevant parameters) and bypassing the performance metric component.

In an embodiment, the learning component performs learning for each of the plurality of resources as a learning function by using the performance metric $f_{\mathrm{Metric}}$. In the embodiment of the network architecture with the network feedback loop which provides the network action-reaction chain, the learning function of each of the plurality of resources is approximated by using suitable algorithms (in parallel, independently, and scalability). The evolution of the quality of the resource is determined by using the performance metric $f_{Metric}$. The learning component observes changes of each adjusted (also already adjusted in historical data) network parameter determined by the PLPO unit or the PML without influencing functionalities of the changes. Because of the introduced network parameter abstraction, the number of network parameters (in the form of the plurality of resources) is significantly reduced, which makes real-time processing of the learning algorithm feasible. In an example, a reinforcement learning (RL) may be suitable for the learning component. To accelerate the learning process, the RL could be combined with N imitation learning (IL). The IL may interact with the experience driven from the PLPO unit over the validation component (fuzzy logic) to focus the learning region and then the RL investigates the learning region of interest.

In the embodiment of the network architecture without the network feedback loop, the learning component applies regression-oriented machine learning or statistical learning methods. The algorithm input is carried out through values of the available network parameters provided by the physical parameter management layer PML. Furthermore, the learning component avoids big data aspects, because there is a limited access to values of the network parameters. Algorithms, which infer the network feedback loop, may estimate the network reaction. That is, apprenticeship learning (AL) could be used to deal with and generalize the unknown network feedback reaction in terms of the RL.

In the embodiment with the network feedback loop, the learning component may further comprise a sampling sub-component. In the above embodiment, the learning component uses available data from the PLPO unit and the PML to avoid information overhead. In an example, there may be not enough data for a certain or several resources (including multiple network parameters). In order to improve the results of the learning component, the sampling sub-component requests, in a minimally intrusive way, new measurements or values of certain network parameters related to the objective resources. In an example, the new measurements or values of certain network parameters related to the objective resources are provided by the re-mapping component of the PAPM layer. The sampling sub-component uses a data sampling model, which is able to perform online data collections, to overcome the problem of not existing data history and to promote real-time prediction. In contrast, most of the learning models (e.g. neuronal networks) require huge amount of training data or data which could be collect on demand. In the embodiment of the present disclosure, the data sampling model of the sampling sub-component is able to decrease the required amount of data.

In an embodiment, the predicting component comprises an aggregation sub-component, an exploitation sub-component and a prediction sub-component (not shown in FIG. 2). The aggregation sub-component is configured to combine the learned functions of each of the plurality of resources. The combination could be used for classification (voting) or regression proposes. Furthermore, the combination may show the overall behavior of the network. The aggregation sub-component accelerates the learning process due to several independent objectives (otherwise a learning function with multiple objectives must be performed, which causes poor real-time performance and accuracy). The exploitation sub-component is configured to utilize the combined learning functions provided by the aggregation sub-component to exploit the learned network behavior, so as to determine dynamic-management policies. The dynamic-management policies may include parameter values recommendation, anomaly report, etc. The prediction sub-component is configured to predict value changes of the plurality of network parameters. The outlook of the value changes is exemplary determined through regression, probability density estimation, hidden Markov chains/processes and/or other suitable method.

The validation component is configured to ensure the learning and action execution performed by the SVML as well as SON in the MAU are correct. The validations may be carried out through fuzzy logic or any other logical driven assistance and correction for building policies and performing learning using QoE driven provided by the PLPO unit. Such kind of logic considers the experiences of the user (provided by the PLPO unit in this embodiment), which make the validation component powerful to verify and control the learning based determined actions. The validation component may include AI and IL. In addition, the validation component interacts with the MAU (especially with the SON) over the layer interaction to perform the validations and thus quality control.

In an embodiment, the SVML may further comprise a SON assistance component configured to transmit the behaviors and the future behaviors of the network to the SON of the MAU for enabling the SON to optimize the at least one target parameter based on the behaviors and the future behaviors of the network. The SON assistance component interacts with the SON in the MAU, to support better overall management. Via providing predicted global network behavior, the SON assistance component could assist the SON in decision making or recommendation tasks. In an example, the SON assistance component interacts with the MAU directly via the service access points (SAPs) between the MAU and SVML for a real-time reason.

In an embodiment, the SVML may further comprise a data analytics/analysis component configured to perform data analytics and/or statistical tasks and to provide analyzed data to the BI layer. The analysis could be represented in probability density functions, parameter/performance metric tables or any suitable data analysis and statistical tool.

In an embodiment, the SVML further comprises a real-time visualization component configured to visualize the results to visualize the results of the SVML layer as a service in a user-oriented manner.

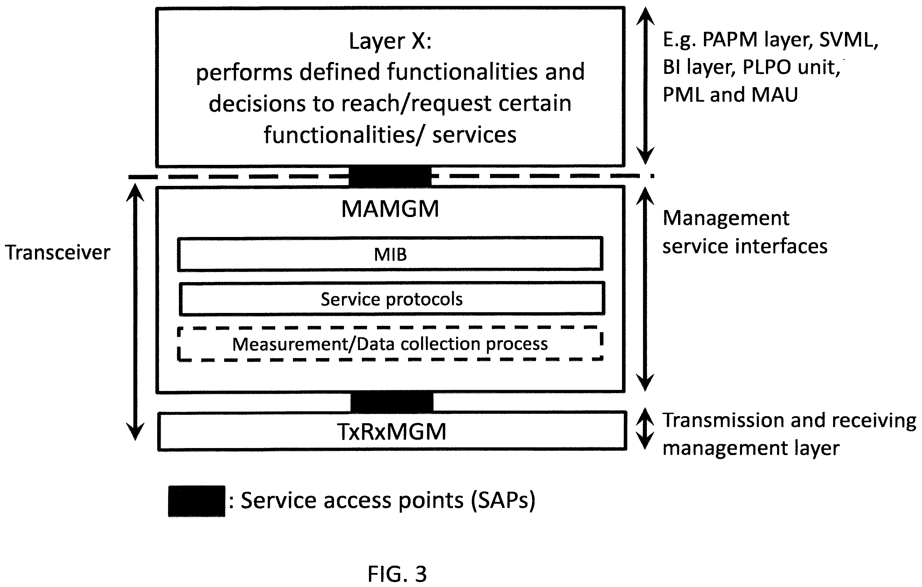

In an embodiment, the PAPM layer, the SVML and/or the BI layer is designed as a reference model to guarantee loosely coupled layer. FIG. 3 shows a reference model according to an example of the present disclosure. In FIG. 3, several service access points (SAPs) are shown and are configured to provide services across sub-layers. In the followings, the SAP between a layer X and medium access management layer (MAMGM) is defined as X-MAMGM-SAP and the SAP between the MAMGM and transmission and reception management layer (TxRxMGM) is defined as MAMGM-TxRxMGM-SAP. Note that the layer X may be the PAPM layer, the smart virtualization management layer SVML, the BI layer, the PLPO unit, physical parameter management layer PML, or MAU, and is not limited herein.

In addition, the sub-layers shown in FIG. 3 are responsible for different tasks. The TxRxMGM provides the access to the existing physical or logical medium or any communication interfaces for data transmission purposes. The MAMGM performs management service interfaces for data/information exchange purposes performing service protocols, measurement/data collection and management information base (MIB). The MIB compiles the attributes, objects and information to manage the layer. The MIB is readable and writable and can be used to exchange information across the layer and among the layers. Furthermore, the protocols for service, measurement/data collection and the associated exchanges are located within the sub-layers of the MAMGM. Note that the measurement/data collection process is performed only through the physical parameter management layer, since the physical parameter management layer PML is the only layer that is equipped with read/write functionalities to access the MAU. In addition, the MAMGM and the TxRxMGM may be modeled as a transceiver.

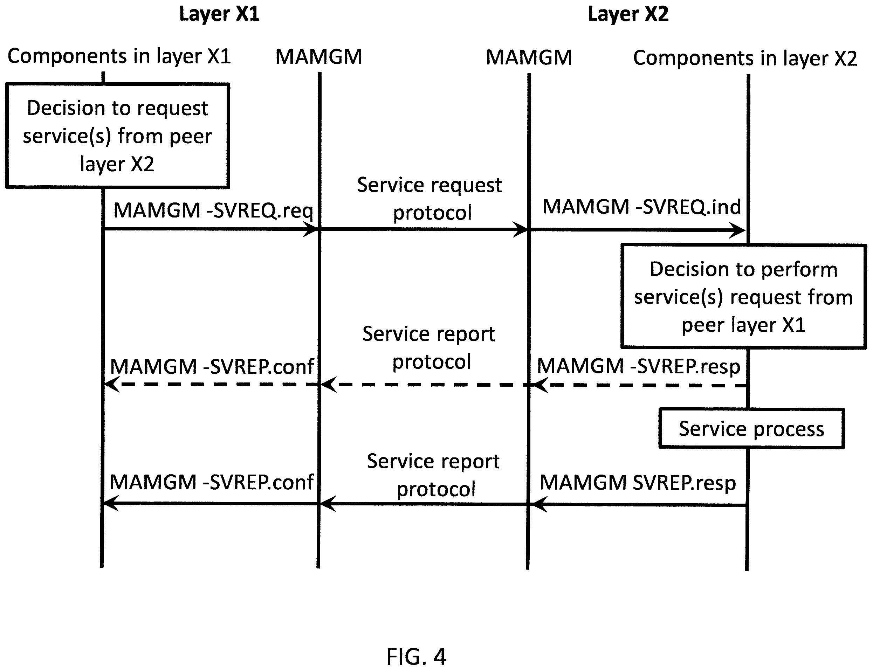

FIG. 4 shows a protocol layer model according to an example of the present disclosure. In FIG. 4, the protocol layer model is configured to request a service among the layers X1 and X2, wherein the above defined SAPs are used. Note that, each of the layers X1 and X2 may be one of the PAPM layer, the SVML, the BI layer, the PML or the MAU and layer X1 is different from the layer X2. In this embodiment, the primitives associated with the SAPs are defined as the followings:

1) req: Request,
2) ind: Indication,
3) resp: Response, and
4) conf: Confirm

In addition, the services define the interaction and type of interworking across the layers and their components. The examples of the services comprise:

1) Measurement Request (MREQ),
2) Service Request (SVREQ),
3) Services Report (SVREP),
4) Measurement (MES),
5) Measurement-Report (MREP), and
6) Data-Collection (DCOL).

In FIG. 4, the protocol layer model operates from a component (within the layer) point of view. Under such a condition, each component within a layer is able to request services from a peer layer. Moreover, each component within a layer is capable of rejecting requested services for security and administration reasons or other reasons.

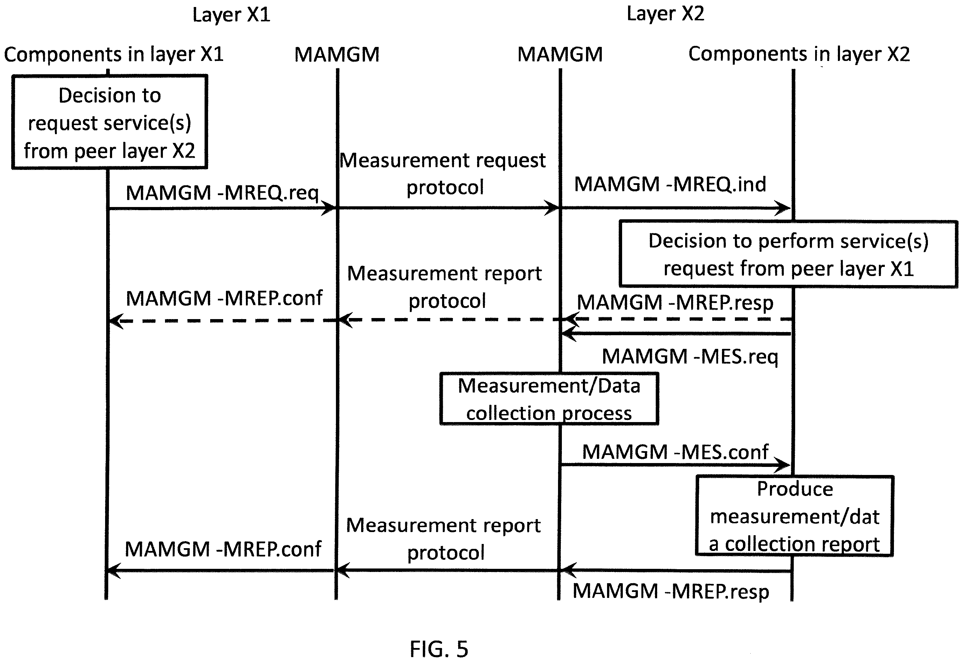

FIG. 5 shows a protocol layer model according to an embodiment of the present disclosure. In FIG. 5, the protocol layer model is configured to request measurements among all layers and the physical PML. In this embodiment, each of the layers X1 and X2 may be one of the PAPM layer, the SVML, the BI layer, the PML or the MAU and layer X1 is different from the layer X2. Note that, each component shown in FIG. 5 may perform decisions and rejections regarding the requests.

To sum up, the network optimization and management tools are high automated so that the network operator may be not able to validate and follow the internal parameter configuration decisions and actions performed on the network. The embodiments of the present disclosure provide the smart dynamic network parameter and behavior monitoring and are able to validate the internal parameter configuration decisions. Moreover, the smart dynamic network parameter and behavior monitoring provided by the present disclosure is able to detect wrong network parameter values.

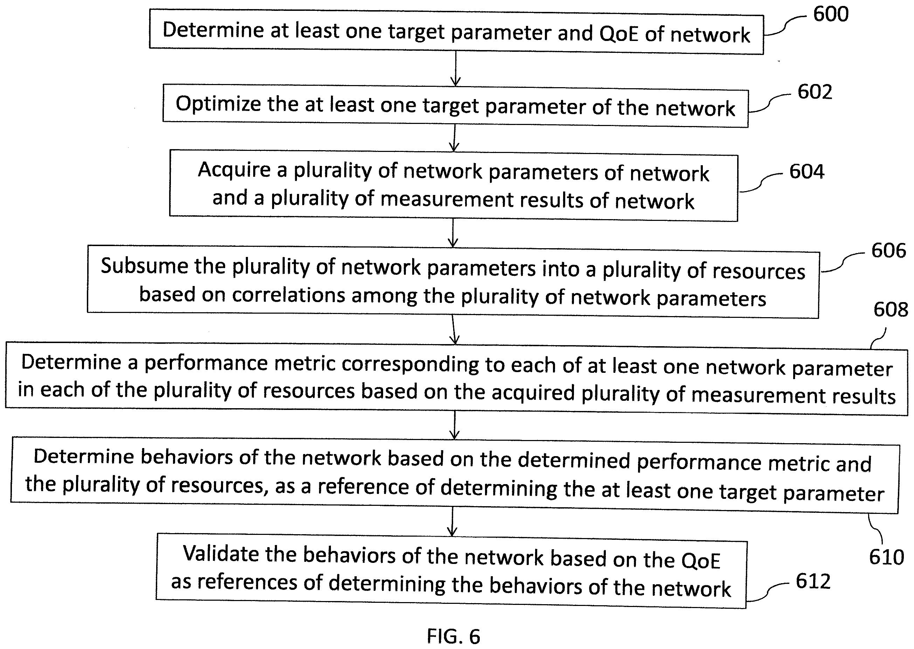

FIG. 6 shows a method for use in a network node (e.g. a base station) according to an embodiment of the present disclosure. Based on the method shown in FIG. 6, the network node is able to monitor changes in a network and to improve a service quality management of the network. As shown in FIG. 6, the method comprises:

Step 600: Determine at least one target parameter and quality of experience (QoE) of a network.
Step 602: Optimize the at least one target parameter of the network.

Step 604: Acquire a plurality of network parameters of the network and a plurality of measurement results of the network.

Step 606: Subsume the plurality of network parameters into a plurality of resources based on correlations among the plurality of network parameters.

Step 608: Determine a performance metric corresponding to each of at least one network parameter in each of the plurality of resources based on the acquired plurality of measurement results.

Step 610: Determine behaviors of the network based on the determined performance metric and the plurality of resources, as a reference of determining the at least one target parameter.

Step 612: Validate the behaviors of the network based on the QoE as references of determining the behaviors of the network.

According to the method shown in FIG. 6, the network node determines at least one target parameter for optimizing a network. In addition, the network node also determines quality of experience (QoE) of the network. Next, the network node optimize the at least one target parameter of the network, e.g., via the SON of the network. After the at least one target parameter is optimized, the network node acquires a plurality of network parameters of the network and a plurality of measurement results of the network, to monitor changes of the network. In order to make real-time-processing feasible, the network node subsumes the plurality of network parameter into a plurality of resource based on correlations among the plurality of parameters. Moreover, the network node determines a performance metric of corresponding to each of at least one network parameter in each of the plurality of resources based on the acquired plurality of measurement results. After determining the plurality of resources and the performance metric of corresponding to each of at least one network parameter in each of the plurality of resources, the network node is able to accordingly determine (e.g. infer) behaviors of the network. Note that, the network node may also predict future behaviors of the network. Finally, the network node validates the determined (current and/or future) behaviors of the network, which are affected by the optimized at least one target parameter, based on the QoE, to acknowledge whether the inferred and/or predicted behaviors are correct. The validation results are further utilized as references of determining the behaviors of the network.

In an embodiment, the network node determines a real number for each of at least one network parameter in each of the plurality of resources based on the plurality of measurement results, to determine the performance metric corresponding to each of at least one network parameter in each of the plurality of resources.

In an embodiment, the network node determines the plurality of measurement results based on the plurality of network parameters for acquiring the plurality of measurement results of the network.

In an embodiment, the network node subsumes the plurality of network parameters to the plurality of resources based on results of determining each the plurality of network parameters is a primary relevant parameter or a secondary relevant parameter and clustering the plurality of resources based on a distribution of the plurality of resources.

In an embodiment, the network node may re-mapping plurality of resources to the plurality of network parameters, to perform new measurement or values of certain network parameters related to the objective resources itself without demanding the new measurement or the values of certain network parameters related to the objective resources from the network.

In an embodiment, the network node applies learning algorithms on each of at least one network parameter of each of the plurality of resources by using the performance metric, to determine the behaviors of the network. The network node may further predict future behaviors of the network based on the determined behaviors of the network. The determined and/or predicted behaviors are validated based on the QoE, to allow the network node determines the behaviors and the future behaviors of the network based on the validation results.

In an embodiment, the network node optimizes the at least one target parameter further based on the determined (and/or predicted) behaviors of the network, e.g., via the SON of the network.

In an embodiment, the network node further analyzes the plurality of network parameters and the plurality measurement results, generates analytic results based on the performance metric and the analyzed results of the plurality of network parameters and the plurality of measurement results and determines the at least one target parameter based on the analytic results.

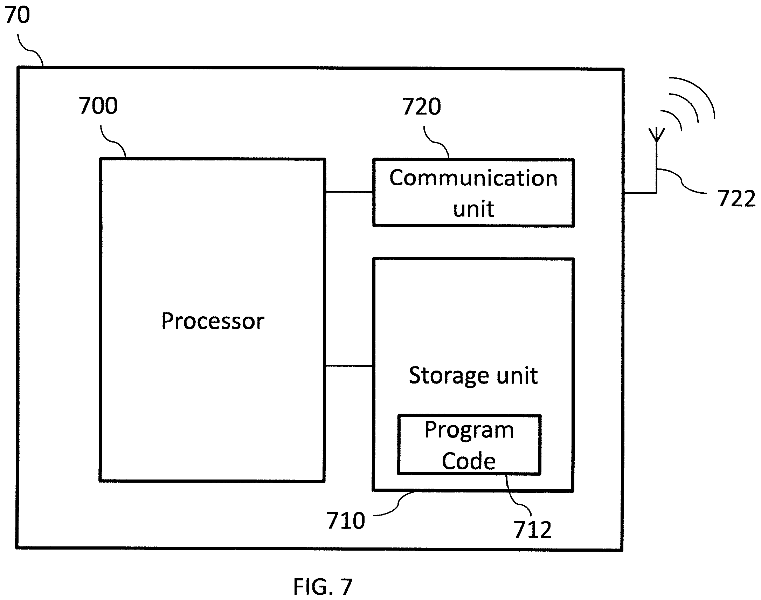

FIG. 7 relates to a schematic diagram of a network node 70 according to an embodiment of the present disclosure. The network node 70 may be a base station (BS), a eNB, a gNB, a network entity, a Mobility Management Entity (MME), Serving Gateway (S-GW), Packet Data Network (PDN) Gateway (P-GW), or Radio Network Controller (RNC), and is not limited herein. The network node 70 may include a processor 700 such as a microprocessor or ASIC, a storage unit 710 and a communication unit 720. The storage unit 710 may be any data storage device that stores a program code 712, which is accessed and executed by the processor 700. Examples of the storage unit 712 include but are not limited to a SIM, ROM, flash memory, RAM, hard-disk, and optical data storage device. The communication unit 720 may be a transceiver and is used to transmit and receive signals (e.g. messages or packets) according to processing results of the processor 700. In an example, the communication unit 720 transmits and receives the signals via an antenna 722 shown in FIG. 7.

In an embodiment, the storage unit 710 and the program code 712 may be omitted. The processor 700 may include a storage unit with stored program code.

The processor 700 may implement any steps described in aforementioned embodiments on the network node 70.

The communication unit 720 may be a transceiver. The communication unit 720 may as an alternative or in addition be combining a transmitting unit and a receiving unit configured to transmit and to receive, respectively, signals to and from a network device (e.g. a UE) or other network nodes.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

**Claims**

1. A network architecture, comprising:

   a planning/policies, PLPO, unit, configured to determine at least one target parameter of a network and to provide quality of experience, QoE,
   a management automation unit, MAU, including a self-organizing-network, SON, configured to optimize the at least one target parameter of the network,
   a physical parameter and measurement layer, PML, comprising a transceiver configured to acquire a plurality of network parameters of the network and a plurality of measurement results of the network from the management automation unit,
   a parameter abstraction and performance metric, PAPM, layer, comprising:

   an acquiring component, configured to acquire the plurality of network parameters and the plurality of measurement results from the MAU via the physical PML,
   a mapping component, configured to subsume the plurality of network parameters into a plurality of resources based on correlations among the plurality of network parameters, wherein each of the plurality of resources comprises the network parameters which are correlated, and
   a performance metric component, configured to determine a performance metric corresponding to each of at least one network parameter, which is involved in each of the plurality of resources, by determining a real number for each of at least one network parameter in each of the plurality of resources based on the acquired plurality of measurement results, and

   a smart virtual monitoring layer, SVML, comprising:

   a learning component, configured to apply learning algorithms on each of the plurality of resources by using the performance metric, to determine behaviors of the network, which are affected by the optimized at least one target parameter,
   a predicting component, configured to predict future behaviors of the network based on the determined behaviors of the network, and
   a validation component, configured to validate the behaviors of the network and the future behaviors of the network, which are affected by the optimized at least one target parameter, based on the QoE for enabling the learning component and the predicting component determine the behaviors and the future behaviors of the network based on the validated results,
   a transceiver, configured to transmit the behaviors of the network to the planning/policies unit for enabling the planning/policies unit to determine the at least one target parameter based on the behaviors of the network, and
a SON assistance component, configured to transmit the determined behaviors and the future behaviors of the network to the SON of the MAU for enabling the SON to optimize the at least one target parameter based on the behaviors and the future behaviors of the network.

**2.** The network architecture of claim 1, wherein the mapping component comprises:

a parameter priority sub-component, configured to determine each the plurality of network parameters is a primary relevant parameter or a secondary relevant parameter,
an abstraction sub-component, configured to subsume the plurality of network parameters to the plurality of resources based on the determined results of the parameter priority sub-component, and
a clustering sub-component, configured to cluster the plurality of resources based on a distribution of the plurality of resources for enabling the abstraction sub-component to subsume the plurality of network parameters to the plurality of resource further based on the plurality of clustered resources.

**3.** The network architecture of claim 1 or 2, wherein the PAPM layer comprises:
a remapping component, configured to re-subsume the plurality of resources to the plurality of network parameters which is provided to the SVML.

**4.** The network architecture of any of claims 1 to 3, wherein the SVML is further configured to analyze the plurality of network parameters and the plurality measurement results, wherein the network architecture further comprises a business intelligence, BI, layer, configured to generate analytic results based on the performance metric and the analyzed results of the SVML for enabling the PLPO unit to determine the at least one target parameter based on the analytic results of the BI layer.

**5.** A method for use in a network node, the method comprising:

determining at least one target parameter and quality of experience, QoE, of a network,
optimizing the at least one target parameter of the network,
acquiring a plurality of network parameters of the network and a plurality of measurement results of the network,
subsuming the plurality of network parameters into a plurality of resources based on correlations among the plurality of network parameters, wherein each of the plurality of resources comprises the network parameters which are correlated,
determining a performance metric corresponding to each of at least one network parameter, which is involved in each of the plurality of resources, by determining a real number for each of at least one network parameter in each of the plurality of resources based on the acquired plurality of measurement results,
apply learning algorithms on each of the plurality of resources by using the performance metric, to determine behaviors of the network, which are affected by the optimized at least one target parameter, based on the determined performance metric and the plurality of resources, as a reference of determining the at least one target parameter,
predicting future behaviors of the network based on the determined behaviors of the network,
validating the behaviors and the future behaviors of the network, which are affected by the optimized at least one target parameter, based on the QoE as references of determining the behaviors and the future behaviors of the network, and
optimizing the at least one target parameter based on the behaviors and the future behaviors of the network.

**6.** The method of claim 5, wherein the step of subsuming the plurality of network parameters into the plurality of resources based on correlations among the plurality of network parameters comprises:
subsuming the plurality of network parameters to the plurality of resources based on determining each the plurality of network parameters is a primary relevant parameter or a secondary relevant parameter and clustering the plurality of resources based on a distribution of the plurality of resources.

**7.** The method of claim 5 or 6, further comprising:
re-subsuming the plurality of resources to the plurality of network parameters.

**8.** The method of any of claims 5 to 7, further comprising:

analyzing the plurality of network parameters and the plurality measurement results, and

generating analytic results based on the performance metric and the analyzed results of the plurality of network parameters and the plurality of measurement results, and

determining the at least one target parameter based on the analytic results.

9. A network node (70) comprising a processor (700) and a storage unit (710), wherein the processor (700) is configured to read a program code (712) from the storage unit (710) and implement a method recited in any of claims 5 to 8.

**Patentansprüche**

1. Netzwerkarchitektur, aufweisend:

eine Planungs-/Richtlinien, PLPO, -Einheit, die derart konfiguriert ist, dass sie zumindest einen Zielparameter eines Netzwerks bestimmt und eine Erfahrungsqualität, QoE, bereitstellt,

eine Verwaltungsautomatisierungseinheit, MAU, mit einem selbstorganisierten Netzwerk, SON, die derart konfiguriert ist, dass sie den zumindest einen Zielparameter des Netzwerks optimiert,

eine physikalische Parameter und Mess -Schicht, PML, die einen Sendeempfänger aufweist, welcher derart konfiguriert ist, dass er von der

Verwaltungsautomatisierungseinheit eine Vielzahl von Netzwerkparametern des Netzwerks und eine Vielzahl von Messergebnissen des Netzwerks erlangt,

eine Parameterabstraktions- und Leistungsmetrik, PAPM, -Schicht, aufweisend:

eine Erfassungskomponente, die derart konfiguriert ist, dass sie von der MAU-Einheit über die physikalische PML die Vielzahl von Netzwerkparametern und die Vielzahl von Messergebnissen erfasst,

eine Abbildungskomponente, die derart konfiguriert ist, dass sie die Vielzahl von Netzwerkparametern auf Grundlage von Korrelationen unter der Vielzahl von Netzwerkparametern in eine Vielzahl von Ressourcen unterteilt, wobei jede Ressource der Vielzahl von Ressourcen die Netzwerkparameter aufweist, die korreliert sind, und

eine Leistungsmetrik-Komponente, die derart konfiguriert ist, dass sie eine Leistungsmetrik bestimmt, die jedem des zumindest einen Netzwerkparameters entspricht, der an jeder Ressource der Vielzahl von Ressourcen beteiligt ist,

indem sie eine tatsächliche Anzahl für jeden Netzwerkparameter des zumindest einen Netzwerkparameters in jeder Ressource der Vielzahl von Ressourcen auf Grundlage der Vielzahl von erfassten Messergebnissen bestimmt, und

eine Smart Virtual Monitoring-Schicht, SVML, aufweisend:

eine Lernkomponente, die derart konfiguriert ist, dass sie Lernalgorithmen auf jede der Vielzahl von Ressourcen anwendet, indem sie die Leistungsmetrik verwendet, um Netzwerkverhaltensweisen zu bestimmen, die von dem zumindest einen optimierten Zielparameter beeinflusst werden,

eine Vorhersagekomponente, die derart konfiguriert ist, dass sie zukünftige Verhaltensweisen des Netzwerks auf Grundlage der bestimmten Verhaltensweisen des Netzwerks vorhersagt, und

eine Validierungskomponente, die derart konfiguriert ist, dass sie die Verhaltensweisen des Netzwerks und die zukünftigen Verhaltensweisen des Netzwerks, die von dem zumindest einen optimierten Zielparameter beeinflusst werden, auf Grundlage der EOQ validiert, um die Lernkomponente und die Vorhersagekomponente in die Lage zu versetzen, die Verhaltensweisen und die zukünftigen Verhaltensweisen des Netzwerks auf Grundlage der validierten Ergebnisse zu bestimmen,

einen Sendeempfänger, der derart konfiguriert ist, dass er das Netzwerkverhalten an die Planungs-/Richtlinien-Einheit sendet, damit die Planungs-/Richtlinien-Einheit den zumindest einen Zielparameter auf Grundlage des Netzwerkverhaltens bestimmen kann, und

eine SON-Unterstützungskomponente, die derart konfiguriert ist, dass sie die bestimmten Verhaltensweisen und zukünftigen Verhaltensweisen des Netzwerks an das SON der MAU-Einheit überträgt, um das SON in die Lage zu versetzen, den zumindest einen Zielparameter auf Grundlage der Verhaltensweisen und zukünftigen Verhaltensweisen des Netzwerks zu optimieren.

2. Netzwerkarchitektur nach Anspruch 1, wobei die Abbildungskomponente aufweist:

eine Parameterprioritäts-Unterkomponente, die derart konfiguriert ist, dass sie bestimmt, welcher Netzwerkparameter aus der Vielzahl von Netzwerkparametern ein primärer wesentlicher Parameter oder ein sekundärer wesentlicher Parameter ist,

eine Abstraktionsunterkomponente, die derart konfiguriert ist, dass sie die Vielzahl von Netzwerkparametern auf Grundlage der bestimmten Ergebnisse der Parameterprioritätsunterkomponente in die Vielzahl von Ressourcen unterteilt, und eine Gruppierungs-Unterkomponente, die derart konfiguriert ist, dass sie die Vielzahl von Ressourcen auf Grundlage einer Verteilung der Vielzahl von Ressourcen gruppiert, um der Abstraktions-Unterkomponente zu ermöglichen, die Vielzahl von Netzwerkparametern in die Vielzahl von Ressourcen ferner auf Grundlage der gruppierten Vielzahl von Ressourcen zu unterteilen.

3. Netzwerkarchitektur nach Anspruch 1 oder 2, wobei die PAPM-Schicht aufweist:
eine Neuzuordnungskomponente, die derart konfiguriert ist, dass sie die Vielzahl von Ressourcen erneut in die Vielzahl von Netzwerkparametern unterteilt, die der SVML bereitgestellt werden.

4. Netzwerkarchitektur nach einem der Ansprüche 1 bis 3, wobei die SVML zusätzlich derart konfiguriert ist, dass sie die Vielzahl von Netzwerkparametern und die Vielzahl von Messergebnissen analysiert,
wobei die Netzwerkarchitektur ferner aufweist:
eine Business Intelligence, BI, -Schicht, die derart konfiguriert ist, dass sie analytische Ergebnisse auf Grundlage der Leistungsmetrik und der analysierten Ergebnisse der SVML erzeugt, um die PLPO-Einheit in die Lage zu versetzen, den zumindest einen Zielparameter auf Grundlage der analytischen Ergebnisse der BI-Schicht zu bestimmen.

5. Verfahren zur Verwendung in einem Netzwerkknoten, wobei das Verfahren umfasst:

Bestimmen von zumindest einem Zielparameter und der Erfahrungsqualität, QoE, eines Netzwerks,
Optimieren des zumindest einen Zielparameters des Netzwerks,
Erlangen einer Vielzahl von Netzwerkparametern des Netzwerks und einer Vielzahl von Messergebnissen des Netzwerks,
Unterteilen der Vielzahl von Netzwerkparametern in eine Vielzahl von Ressourcen auf Grundlage von Korrelationen unter der Vielzahl von Netzwerkparametern, wobei jede Ressource der Vielzahl von Ressourcen die Netzwerkparameter umfasst, die korreliert sind,
Bestimmen einer Leistungsmetrik, die jedem Netzwerkparameter des zumindest einen Netzwerkparameters entspricht, der in jeder Ressource der Vielzahl von Ressourcen involviert ist, durch Bestimmen einer tatsächlichen Zahl für jeden von zumindest einem Netzwerkparameter in jeder der Vielzahl von Ressourcen auf Grundlage der erlangten Vielzahl von Messergebnissen,
Anwenden von Lernalgorithmen auf jede der mehreren Ressourcen unter Verwendung der Leistungsmetrik, um auf Grundlage der bestimmten Leistungsmetrik und der Vielzahl vom Ressourcen als Referenz zum Bestimmen des zumindest einen Zielparameters Verhaltensweisen des Netzwerks zu bestimmen, die durch den zumindest einen optimierten Zielparameter beeinflusst werden,
Vorhersagen zukünftiger Verhaltensweisen des Netzwerks auf Grundlage der bestimmten Verhaltensweisen des Netzwerks,
Validieren der Verhaltensweisen und zukünftigen Verhaltensweisen des Netzwerks, die durch den zumindest einen optimierten Zielparameter beeinflusst werden, auf Grundlage der QoE als Referenz für die Bestimmung von Verhaltensweisen und zukünftigen Verhaltensweisen des Netzwerks, und
Optimieren des zumindest einen Zielparameters auf Grundlage des Verhaltens und des zukünftigen Verhaltens des Netzwerks.

6. Verfahren nach Anspruch 5, wobei der Schritt des Unterteilens der Vielzahl von Netzwerkparametern in die Vielzahl von Ressourcen auf Grundlage von Korrelationen unter der Vielzahl von Netzwerkparametern umfasst:
Unterteilen der Vielzahl von Netzwerkparametern in die Vielzahl von Ressourcen auf Grundlage der Bestimmung, dass jeder der Vielzahl von Netzwerkparametern ein primärer wesentlicher Parameter oder ein sekundärer wesentlicher Parameter ist, und Gruppieren der Vielzahl von Ressourcen auf Grundlage einer Verteilung der Vielzahl von Ressourcen.

7. Verfahren nach Anspruch 5 oder 6, ferner umfassend:
die erneute Unterteilung der Vielzahl von Ressourcen in die Vielzahl von Netzwerkparameter.

8. Verfahren nach einem der Ansprüche 5 bis 7, ferner umfassend:

Analysieren der Vielzahl von Netzwerkparameter und der Vielzahl von Messergebnissen, und
Generieren von Analyseergebnissen auf Grundlage der Leistungsmetrik und der analysierten Ergebnisse der Vielzahl von Netzwerkparametern und der Vielzahl von Messergebnissen, und
Bestimmen des zumindest einen Zielparameters auf Grundlage der Analyseergebnisse.

**9.** Netzwerkknoten (70), aufweisend einen Prozessor (700) und einer Speichereinheit (710), wobei der Prozessor (700) derart konfiguriert ist, dass er einen Programmcode (712) aus der Speichereinheit (710) liest und ein Verfahren nach einem der Ansprüche 5 bis 8 implementiert.

**Revendications**

**1.** Architecture de réseau, comprenant :

une unité de planification/politiques, PLPO, configurée pour déterminer au moins un paramètre cible d'un réseau et pour fournir une qualité d'expérience, QoE,
une unité d'automatisation de gestion, MAU, comportant un réseau auto-organisé, SON, configurée pour optimiser l'au moins un paramètre cible du réseau,
une couche à paramètre physique et de mesure, PML, comprenant un émetteur-récepteur configuré pour acquérir de l'unité d'automatisation de gestion une pluralité de paramètres de réseau du réseau et une pluralité de résultats de mesure du réseau,
une couche métrique de performance et d'abstraction de paramètre, PAPM,
comprenant :

un composant d'acquisition configuré pour acquérir de l'unité MAU par l'intermédiaire de la PML physique la pluralité de paramètres de réseau et la pluralité de résultats de mesure,
un composant de mappage configuré pour subdiviser la pluralité de paramètres de réseau en une pluralité de ressources sur la base de corrélations parmi la pluralité de paramètres de réseau, dans lequel chaque ressource de la pluralité de ressources comprend les paramètres de réseau qui sont corrélés, et
un composant de métrique de performance configuré pour déterminer une métrique de performance correspondant à chacun de l'au moins un paramètre de réseau, qui est impliqué dans chaque ressource de la pluralité de ressources, en déterminant un nombre réel pour chaque paramètre de réseau de l'au moins un paramètre de réseau dans chaque ressource de la pluralité de ressources sur la base de la pluralité de résultats de mesure acquise, et

une couche de surveillance virtuelle intelligente, SVML, comprenant :

un composant d'apprentissage configuré pour appliquer des algorithmes d'apprentissage sur chaque ressource de la pluralité de ressources en utilisant la métrique de performance pour déterminer des comportements du réseau qui sont affectés par l'au moins un paramètre cible optimisé,
un composant de prédiction configuré pour prévoir des comportements futurs du réseau sur la base des comportements déterminés du réseau, et
un composant de validation configuré pour valider les comportements du réseau et les comportements futurs du réseau, qui sont affectés par l'au moins un paramètre cible optimisé, sur la base de la QoE pour permettre au composant d'apprentissage et au composant de prédiction de déterminer les comportements et les comportements futurs du réseau sur la base des résultats validés,
un émetteur-récepteur configuré pour transmettre les comportements du réseau à l'unité de planification/de politiques pour permettre à l'unité de planification/de politiques de déterminer l'au moins un paramètre cible sur la base des comportements du réseau, et
un composant d'assistance SON configuré pour transmettre les comportements déterminés et les comportements futurs du réseau au SON de l'unité MAU pour permettre au SON d'optimiser l'au moins un paramètre cible sur la base des comportements et des comportements futurs du réseau.

**2.** Architecture de réseau selon la revendication 1, dans lequel le composant de mappage comprend :

un sous-composant de priorité de paramètre configuré pour déterminer le paramètre de réseau de la pluralité de paramètres de réseau qui est un paramètre essentiel primaire ou un paramètre essentiel secondaire,
un sous-composant d'abstraction configuré pour subdiviser la pluralité de paramètres de réseau en la pluralité de ressources sur la base des résultats déterminés du sous-composant de priorité de paramètre, et

un sous-composant de groupement configuré pour grouper la pluralité de ressources sur la base d'une distribution de la pluralité de ressources pour permettre au sous-composant d'abstraction de subdiviser la pluralité de paramètres de réseau en la pluralité de ressources sur la base en outre de la pluralité de ressources groupées.

3. Architecture de réseau selon la revendication 1 ou 2, dans laquelle la couche PAPM comprend :
un composant de remappage configuré pour subdiviser à nouveau la pluralité de ressources en la pluralité de paramètres de réseau qui est fournie à la SVML.

4. Architecture de réseau selon l'une quelconque des revendications 1 à 3, dans lequel la SVML est configurée en outre pour analyser la pluralité de paramètres de réseau et la pluralité de résultats de mesure,

dans laquelle l'architecture de réseau comprend en outre
une couche de veille stratégique, BI, configurée pour générer des résultats analytiques sur la base de la métrique de performance et des résultats analysés de la SVML pour permettre à l'unité PLPO de déterminer l'au moins un paramètre cible sur la base des résultats analytiques de la couche BI.

5. Procédé destiné à être utilisé dans un noeud de réseau, le procédé comprenant :

la détermination d'au moins un paramètre cible et de la qualité d'expérience, QoE, d'un réseau,
l'optimisation de l'au moins un paramètre cible du réseau,
l'acquisition d'une pluralité de paramètres de réseau du réseau et d'une pluralité de résultats de mesure du réseau,
la subdivision de la pluralité de paramètres de réseau en une pluralité de ressources sur la base de corrélations parmi la pluralité de paramètres de réseau, dans lequel chaque ressource de la pluralité de ressources comprend les paramètres de réseau qui sont corrélés,
la détermination d'une métrique de performance correspondant à chaque paramètre de réseau de l'au moins un paramètre de réseau, qui est impliqué dans chaque ressource de la pluralité de ressources, en déterminant un nombre réel pour paramètre de réseau de l'au moins un paramètre de réseau dans chaque ressource de la pluralité de ressources sur la base de la pluralité acquise de résultats de mesure,
l'application d'algorithmes d'apprentissage sur chaque ressource de la pluralité de ressources en utilisant la métrique de performance, pour déterminer des comportements du réseau, qui sont affectés par l'au moins un paramètre cible optimisé, sur la base de la métrique de performance déterminée et de la pluralité de ressources, en tant qu'une référence pour déterminer l'au moins un paramètre cible, la prédiction de comportements futurs du réseau sur la base des comportements déterminés du réseau,
la validation des comportements et des comportements futurs du réseau, qui sont affectés par l'au moins un paramètre cible optimisé, sur la base de la QoE en tant que références de la détermination des comportements et des comportements futurs du réseau, et
l'optimisation de l'au moins un paramètre cible sur la base des comportements et des comportements futurs du réseau.

6. Procédé selon la revendication 5, dans lequel l'étape de subdivision de la pluralité de paramètres de réseau en la pluralité de ressources sur la base de corrélations parmi la pluralité de paramètres de réseau comprend :
la subdivision de la pluralité de paramètres de réseau en la pluralité de ressources sur la base de la détermination de paramètre de réseau de la pluralité de paramètres de réseau qui est un paramètre essentiel primaire ou un paramètre essentiel secondaire et le groupement de la pluralité de ressources sur la base d'une distribution de la pluralité de ressources.

7. Procédé selon la revendication 5 ou 6, comprenant en outre :
la subdivision une nouvelle fois de la pluralité de ressources en la pluralité de paramètres de réseau.

8. Procédé selon l'une quelconque des revendications 5 à 7, comprenant en outre :

l'analyse de la pluralité de paramètres de réseau et de la pluralité de résultats de mesure, et
la génération de résultats analytiques sur la base de la métrique de performance et des résultats analysés de la pluralité de paramètres de réseau et de la pluralité de résultats de mesure, et
la détermination de l'au moins un paramètre cible sur la base des résultats analytiques.

**9.** Noeud de réseau (70) comprenant un processeur (700) et une unité de stockage (710), dans lequel le processeur (700) est configuré pour lire un code de programme (712) depuis l'unité de stockage (710) et pour mettre en oeuvre un procédé selon l'une quelconque des revendications 5 à 8.

FIG. 1

FIG.2

FIG. 3

EP 3 787 330 B1

**Layer X1**                                                    **Layer X2**

Components in layer X1    MAMGM        MAMGM    Components in layer X2

FIG. 4

FIG. 5

EP 3 787 330 B1

Determine at least one target parameter and QoE of network — 600

↓

Optimize the at least one target parameter of the network — 602

↓

Acquire a plurality of network parameters of network and a plurality of measurement results of network — 604

↓

Subsume the plurality of network parameters into a plurality of resources based on correlations among the plurality of network parameters — 606

608

↓

Determine a performance metric corresponding to each of at least one network parameter in each of the plurality of resources based on the acquired plurality of measurement results

↓

Determine behaviors of the network based on the determined performance metric and the plurality of resources, as a reference of determining the at least one target parameter

↓

Validate the behaviors of the network based on the QoE as references of determining the behaviors of the network — 612

610

FIG. 6

EP 3 787 330 B1

FIG. 7

**EP 3 787 330 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3058772 A1
- WO 2017176248 A1
- US 2019222491 A1
- US 2016352924 A1